# EUROPEAN PATENT SPECIFICATION

(11) **EP 3 892 888 B1**
(45) Date of publication and mention of the grant of the patent: **11.06.2025**
(21) Application number: 20168632.6
(22) Date of filing: 08.04.2020
(51) Int. Cl.: F16H 48/40

(54) **A DIFFERENTIAL ASSEMBLY**
DIFFERENTIALANORDNUNG
ENSEMBLE DIFFÉRENTIEL

(43) Date of publication of application: 13.10.2021
(73) Proprietor: Volvo Car Corporation, 40531 Göteborg (SE)
(72) Inventor: STEN, Erik, SE-461 43 TROLLHÄTTAN (SE)
(74) Representative: Kransell & Wennborg KB

(56) References cited:
- WO-A1-2019/021555
- DE-A1- 102004 057 339
- DE-A1- 102007 003 675
- DE-A1- 102010 011 442
- DE-A1- 3 626 442
- DE-C1- 19 814 309
- JP-A- 2004 197 819
- US-A- 1 243 720

## Description

### TECHNICAL FIELD

The present invention relates to a differential assembly distributing torque from an input shaft to first and second output shafts. The present invention further relates to a vehicle, such as e.g. an electric or hybrid vehicle, comprising such a differential assembly.

### BACKGROUND

**In** a vehicle, a differential is used for distributing an input torque (or input rotational speed) to two output shafts, wherein each output shaft is connected with a driving wheel. During driving, and especially during turns and cornering, the different rotational speeds of the wheels are taken care of by the differential.

A differential, or differential assembly, typically comprises a ring gear configured to receive torque from the input shaft, a carrier attached to, and rotatable with, the ring gear, a differential housing, and a bearing assembly supporting the carrier within the differential housing. The differential further comprises internal gearing, such at least one differential gear and bevel gears configured to transmit the torque from the ring gear to the output shafts. For example, DE3626442A1 discloses a differential assembly for distributing torque from an input shaft to an output shaft, the differential assembly comprising a ring gear, a carrier, a differential housing and a bearing assembly supporting the carrier within the differential housing. The bearing assembly comprises a ball bearing and a tapered rolling bearing.

Typically, the bearing assembly comprises tapered rolling bearings which are able to take up both axial and radial loads. Tapered rolling bearing provide a very stable setup and great durability. However, the tapered rolling bearings are associated with drag losses due to the need of pre-load. Another problem is the shimming process required in the bearing assembly to set the pre-load. Moreover, a reliable pre-load over a wide temperature range, and over time, is difficult to maintain. This could for example lead to poor gear mesh contact.

Accordingly, it is desirable to develop an improved differential assembly.

### SUMMARY

In general, the disclosed subject matter relates to a differential assembly distributing torque from an input shaft to first and second output shafts via a ring gear, typically in a vehicle, such as in an electric vehicle, wherein a bearing assembly of the differential assembly comprises a cylindrical roller bearing and a ball bearing wherein the cylindrical roller bearing is arranged closer to the ring gear compared the ball bearing relative the ring gear. Hereby, the bearing assembly can take up both axial and radial loads with a minimum of drag losses as there is no, or at least less, need for pre-load. Moreover, the shimming process can be omitted, or at least kept to a minimum.

Thus, according to a first aspect of the present invention, a differential assembly which is configured to distribute torque from an input shaft to first and second output shafts is provided. The differential assembly comprises a ring gear configured to receive torque from the input shaft, a carrier attached to, and rotatable with, the ring gear, a differential housing, and a bearing assembly supporting the carrier within the differential housing, the bearing assembly comprising a ball bearing and a cylindrical roller bearing arranged on opposite sides of the ring gear, a distance between the cylindrical roller bearing and the ring gear being smaller than a distance between the ball bearing and the ring gear. The distance is an axial distance, i.e. a distance along an axial axis of the differential assembly which coincides with the longitudinal axis of the output shafts.

Hereby, as the stiffness of a cylindrical roller bearing is higher compared to the stiffness of a ball bearing, and with the additional specific arrangement in which the cylindrical roller bearing is arranged relatively closer to the ring gear, the differential assembly can minimize gear mesh deflection (or gear lead mismatch). Thus, when the differential is subject to a radial load, the differential assembly withstands any tendency of skewness induced by the radial load and enables the output shafts to remain parallel to the input shaft (i.e. tilting or gear mesh deflection of the differential assembly can be avoided). In this respect, the differential assembly is particularly suitable for offset transmission in which a longitudinal axis of the input shaft is arranged parallel to a longitudinal axis of the two output shafts. Thus, according to at least one example embodiment, the differential assembly is configured for an offset transmission.

According to at least one example embodiment, the bearing assembly of the differential assembly comprises no tapered roller bearings. Thus, in such embodiments, the differential assembly is free from any tapered roller bearings.

According to at least one example embodiment the carrier comprises a first journal portion holding the first output shaft, and a second journal portion arranged on an opposite side to the first journal portion, the second journal portion holding the second output shaft, wherein the ring gear is asymmetrically arranged on the carrier to form a relative smaller first carrier side arranged between the ring gear and the first journal portion, and a relative larger second carrier side arranged between the ring gear and the second journal portion, and wherein the cylindrical roller bearing supports the carrier to the differential housing at the first carrier side. Hereby, skewness induced by the radial load via the asymmetrically arranged ring gear can be reduced, or even avoided, by the relative stiff arrangement of the first carrier side which otherwise would be prone to tilt.

According to at least one example embodiment, the cylindrical roller bearing comprises an inner race, an outer race, and a plurality of cylindrical rollers disposed between the inner and outer races, and wherein the inner race is circumferentially attached to the carrier at the first carrier side, and the outer race is non-rotatably arranged with respect to the differential housing. Such arrangement provides a stable and yet compact configuration of the cylindrical roller bearing. The cylindrical roller bearing may comprise, or be referred to as, a needle roller bearing. In a needle roller bearing, the plurality of cylindrical rollers are formed as needles.

According to at least one example embodiment, the ball bearing comprises an inner race, an outer race, and a plurality of balls disposed between the inner and outer races, and wherein the inner race is circumferentially attached to the carrier at the second carrier side, and the outer race is non-rotatably arranged with respect to the differential housing. Such arrangement provides a stable and yet compact configuration of the ball bearing.

According to at least one example embodiment, the differential assembly further comprises retaining rings holding the ball bearing in axial position relative the differential housing and the carrier respectively. Hereby, the ball bearing can better take up axial loads, and axial loads in both directions.

According to at least one example embodiment, the cylindrical roller bearing is configured and arranged to, when torques is transferred from the input shaft to the two output shafts, withstand a higher radial load compared to the ball bearing. Thus, by having the cylindrical roller bearing arranged closer to the ring gear, at the relatively smaller carrier side, skewness or tilting of the differential assembly can be reduced, or even avoided, as the cylindrical roller bearing can withstand a relatively higher radial load.

According to at least one example embodiment, the cylindrical roller bearing is arranged co-axially with the ring gear, and the ring gear at least partly encircles the cylindrical roller bearing. Hereby, the cylindrical roller bearing can be brought very close to the ring gear, and thus close to the point of application of the (asymmetrical) radial load, and thereby counteract the tendency for skewedness and gear mesh deflection.

According to at least one example embodiment, the cylindrical roller bearing is arranged co-axially with the ring gear, and at least a portion of the cylindrical roller bearing is arranged in the same geometrical plane as a cross section of the ring gear. Thus, a cross section, such as a circular or annular cross section, of the cylindrical roller bearing and the ring gear overlap at least along an axial portion of differential assembly.

According to at least one example embodiment, the carrier is windowless. Hereby, the carrier has a rotational symmetry along the axial axis of the differential assembly.

According to at least one example embodiment, the carrier comprises at least two separate carrier parts, a relative larger first carrier part, and a relative smaller second carrier part, the second carrier part being a detachable cap in relation to the first carrier part. Hereby, the interior of the carrier can be accessible without providing a window in the carrier.

According to at least one example embodiment, the cylindrical roller bearing is larger than the ball bearing. For example, the inner race of the cylindrical roller bearing has a larger diameter compared to the inner race of the ball bearing. Hereby, the cylindrical roller bearing can be arranged closer to the ring gear with advantageous as previously described.

According to at least one example embodiment, the input shaft has a first longitudinal axis, and the common longitudinal axis of the two output shafts is a second longitudinal axis, wherein the first and second longitudinal axis are parallel. Thus, such differential assembly is an offset differential assembly.

According to at least a second aspect of the present invention, a vehicle, such as an electrical vehicle or hybrid is provided. The vehicle comprises a differential assembly according to the first aspect of the invention.

### BRIEF DESCRIPTION OF DRAWINGS

FIG. 1 is a schematic illustration of a vehicle comprising a transmission arrangement and bearing assembly according to an embodiment of the invention;
FIG. 2A-2C are schematic illustrations of a bearing assembly according to an embodiment of the invention; and
FIG. 3 is cross sectional view along the axial direction of a transmission arrangement and a bearing assembly according to an embodiment of the invention.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

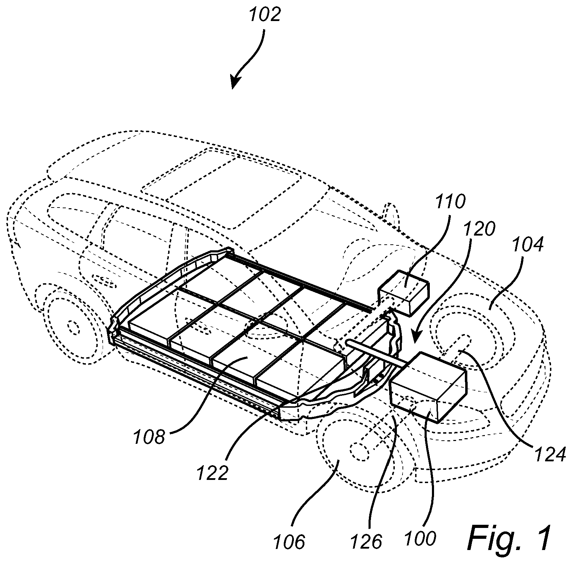

Fig. 1 is a schematic illustration of a differential assembly 100 arranged in a vehicle 102. Fig. 1 further illustrates a plurality of battery packs 108 and an electric motor 110 driven by the battery packs 108. The vehicle 102 further comprises a transmission arrangement 120 comprising an input shaft 122 coupled to the electric motor 110, and two output shafts 124, 126 configured to transfer rotational motion to the front wheels 104, 106 of the vehicle 102. The differential assembly 100 enables the output shafts 124, 126 to rotate with different rotational speeds while delivering torque to both of them. The differential assembly 100 forms a part of the transmission arrangement 120. Thus, the battery packs 108 powers the electric motor 110 which drives the front wheels 104, 106 of the vehicle 102 via the transmission arrangement 120 and differential assembly 100. The differential assembly 100 is thus configured to distribute torque (rotational motion) from the input shaft 122 to the first and second output shafts 124, 126.

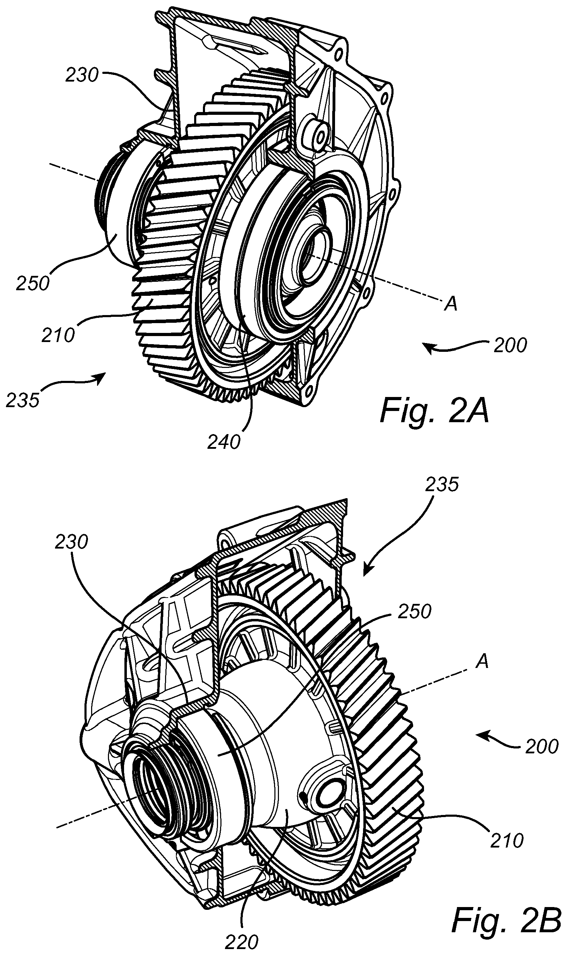

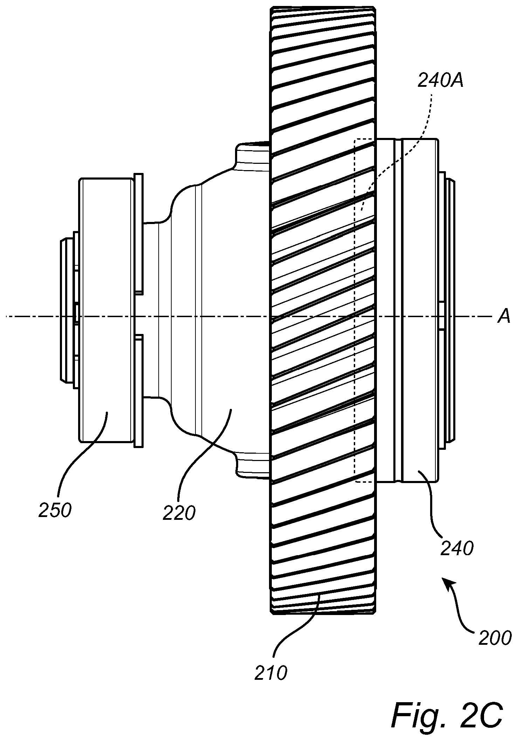

Fig. 2A and Fig. 2B illustrate perspective views of a differential assembly 200, and Fig. 2C illustrates a top view of the same differential assembly 200. Figs. 2A-2C will be described jointly in the following.

The differential assembly 200 may be used as the differential assembly 100 in vehicle 102 of Fig. 1, and is thus configured to distribute torque from an input shaft to first and second output shafts (as shown in Fig. 1). The differential assembly 200 comprises a ring gear 210 configured to receive torque from the input shaft, a carrier 220 attached to, and rotatable with, the ring gear 210, a differential housing 230 (only shown in part), and a bearing assembly 235 supporting the carrier 220 within the differential housing 230. The carrier 220 is windowless, and thus, rotational symmetric along the axial axis A. Moreover, a windowless carrier 220 is advantageous due to improved rigidity and stiffness.

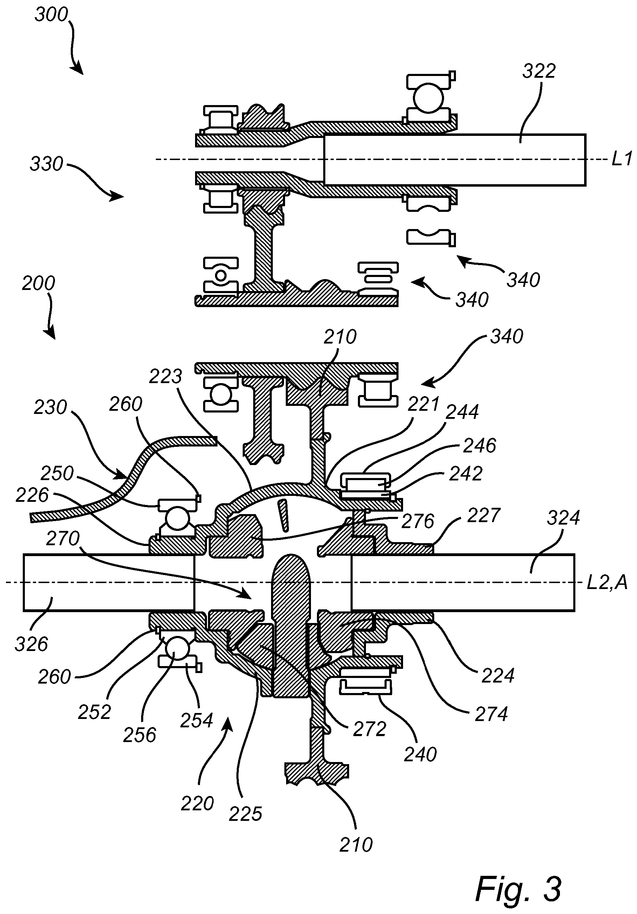

As will be described in greater detail with reference to Fig. 3, but briefly mentioned here, the bearing assembly 235 comprises cylindrical roller bearing 240 and a ball bearing 250 arranged on opposite sides of the ring gear 235. As is clear from the differential assembly 200 of Figs. 2A-2B, a distance, such as an axial distance along the axial axis A, between the cylindrical roller bearing 240 and the ring gear 210 is smaller than a distance, such as an axial distance, between the ball bearing 250 and the ring gear 210. In other words, the cylindrical roller bearing 240 is arranged closed to the ring gear 210 as compared to the ball bearing 250. In other words, the cylindrical roller bearing 240 and the ball bearing 250 are space apart aligned along the axial axis A of the differential assembly 200, the axial axis A coinciding with output shaft axes of the first and second output shafts (as shown in Fig. 1).

As shown in Fig. 2C, the cylindrical roller bearing 240 is arranged co-axially with the ring gear 210, and at least a portion of the cylindrical roller bearing 240A is housed within the ring gear 210. The cylindrical roller bearing 240 is thus at least partly contained or held within the ring gear 210. In other words, said portion 240A is arranged in the same geometrical plane as a cross section of the ring gear 210, the cross section being perpendicular to the axial axis A (i.e. the axial axis A is a normal to said cross section). Stated differently, the ring gear 210 has a circular (or annular) cross section in the geometrical plane, wherein at least a portion 240A of the cylindrical roller bearing 240 along the axial axis A has a circular cross section in the same geometrical plane. Thus, at least a portion 240A of the cylindrical roller bearing 240 is housed inside a geometrical cylinder for which outer surfaces are defined by the ring gear 210. As a result, the cylindrical roller bearing 240 is arranged close to the ring gear 210 and can provide the needed stiffness to withstand any tendency of skewness induced by a radial load (e.g. via the ring gear 210). As is clear from Fig. 2C, the ball bearing 250 is not housed inside the ring gear 210, i.e. a circular (or annular) cross section of the ball bearing 250 is distant from the above-mentioned geometrical plane, or any circular cross section of the ring gear 210.

Fig. 3 is a cross sectional view along the axial axis A of the differential assembly 200 of Figs. 2A-2C, In Fig. 3, the differential assembly 200 is disclosed as being part of a transmission arrangement 300. The transmission arrangement 300 comprises an input shaft 322, a first output shaft 324, and a second output shaft 326. The differential assembly 200 is thus configured to transmit and distribute a torque from the input shaft 322 to the two output shafts 324, 326. The transmission arrangement 300 of Fig. 3 is an offset transmission as the input shaft 322 has a first longitudinal axis L1, and the two output shafts 324, 326 have a common section longitudinal axis L2 which is parallel to the first longitudinal axis L1. The second longitudinal axis L2 is here coinciding with the axial axis A of the differential assembly 200. The input shaft 322 is coupled to the ring gear 210 via a gear arrangement 330, here referred to as an input gear arrangement 330. The input shaft 322 and input gear arrangement 330 are supported by various bearings 340, not described further here.

The differential assembly 200 further comprises a gear arrangement 270, here being referred to as a differential gear arrangement 270. The differential gear arrangement 270 comprises the ring gear 210, a differential pinion gear 272, a first side gear or bevel gear 274 arranged to mesh with the differential pinion gear 272 and configured to transmit torque to the first output shaft 324. The differential gear arrangement 270 further comprises a second side gear or bevel gear 276 arranged to mesh with the differential pinion gear 272 and configured to transmit torque to the second output shaft 326. The first and second bevel gears 274, 276 are freely rotatably held inside of the carrier 220 such that the gear arrangement 270 is configured to permit different rotational speeds of the first and second output shafts 324, 326. The first and second bevel gears 274, 276 are thus configured to rotate around the axial axis A, and the torques is transmitted from the input shaft 322 via the input gear arrangement 330, and the differential gear arrangement 270 to the first and second output shafts 324, 326.

As seen in Fig. 3, the carrier 220 comprises a first journal portion 224 configured to hold the first output shaft 324, and a second journal portion 226 configured to hold the second output shaft 326. The first and second journal portions 224, 226 arranged on an opposite sides of the carrier 220, and on opposite sides of the ring gear 210. Moreover, the ring gear 210 is asymmetrical arranged on the carrier 220 to form a relative smaller first carrier side 221 arranged between the ring gear 210 and the first journal portion 224, and a relative larger second carrier side 223 arranged between the ring gear 210 and the second journal portion 226. The journal portions 224, 226 may be referred to as stub shafts.

The bearing assembly 235, here the cylindrical roller bearing 240 and the ball bearing 250, are disclosed to support the carrier 220 within the differential housing 230 (of which only a part is shown). The cylindrical roller bearing 240 supports the carrier 220 to the differential housing 230 at the first carrier side 221, and the ball bearing 250 supports the carrier 220 to the differential housing 230 at the second carrier side 223. The cylindrical roller bearing 240 comprises an inner race 242, an outer race 244, and a plurality of cylindrical rollers 246 (of which only one is shown in Fig. 3) disposed between the inner and outer races 242, 244. The inner race 242 is circumferentially attached to the carrier 220 at the first carrier side 221, and the outer race is non-rotatably arranged with respect to the differential housing 230. Correspondingly, the ball bearing 250 comprises an inner race 252, an outer race 254, and a plurality of balls 256 disposed between the inner and outer races 252, 254. The inner race 252 of the ball bearing 250 is circumferentially attached to the carrier 220 at the second carrier side 223, and the outer race 254 of the ball bearing 250 is non-rotatably arranged with respect to the differential housing 230. Furthermore, in the embodiment shown in Fig. 3, the second journal portion 226 project into the bearing seat of the ball bearing 250, and thus holds the inner race 252 of the ball bearing 250. The first journal portion 224 does not project into the bearing seat of the cylindrical roller bearing 240, but is instead separated from the inner race 242 of the cylindrical roller bearing 240.

The configuration and arrangement of the bearing assembly 235 enables the differential assembly 200 to withstand a higher radial load without skewing as compared to prior art solutions. More specifically, the configuration and arrangement of the cylindrical roller bearing 240 enables it to withstand a higher radial load compared to a ball bearing, when torques is transferred from the input shaft 322 to the two output shafts 324, 326. In more detail, the stiffness of a cylindrical roller bearing is higher compared to the stiffness of a ball bearing, and with the additional specific arrangement in which the cylindrical roller bearing 240 is arranged relatively close to the ring gear 210, when the differential is subject to a radial load, the differential assembly 200 withstands any tendency of skewness induced by the radial load and enables the output shafts 324, 326 to remain parallel to the input shaft 322.

The differential assembly 200 of Fig. 3 further comprises retaining rings 260 arranged to hold the ball bearing 250 in axial position relative the differential housing 230 and the carrier 220 respectively. The retaining rings 260 enable the ball bearing 250 to accommodate axial loads in both directions (i.e. loads along the axial axis A).

As mentioned with reference to Fig. 2, the carrier 220 is windowless. However, parts of the differential gearing arrangement 270 may be accessed by a detachable carrier cap 227. In more detail, the carrier 220 comprises two separate carrier parts, 225, 227. That is, a relative larger first carrier part 225, and a relative smaller second carrier part 227, the second carrier part 227 being arranged as a detachable carrier cap 227 in relation to the first carrier part 225. In the embodiment of Fig. 3, the detachable carrier cap 227 comprises the first journal portion 224, while the first carrier part 225 supports the bearing assembly 235. Hereby, the differential pinion, and bevel gears 272, 274, 276 held in the carrier 220 can be accessed by removing the detachable carrier cap 227.

Even though the invention has been described with reference to specific exemplifying embodiments thereof, many different alterations, modifications and the like will become apparent for those skilled in the art. Also, it should be noted that parts of the system may be omitted, interchanged or arranged in various ways, the differential assembly and transmission arrangement yet being able to perform the functionality of the present invention. The differential assembly 200 described with reference to Figs. 2A-2C may used as the differential assembly 100 of the vehicle 102 in Fig. 1. Correspondingly, the transmission arrangement 300 of Fig. 3 may be used as the transmission arrangement 120 of Fig. 1.

Additionally, variations to the disclosed embodiments can be understood and effected by the skilled person in practicing the claimed invention, from a study of the drawings, the description, and the appended claims. In the claims, the word "comprising" does not exclude other elements or steps, and the indefinite article "a" or "an" does not exclude a plurality.

## Claims

1. A differential assembly (100, 200) distributing torque from an input shaft (122, 322) to first and second output shafts (124, 126, 324, 326), the differential assembly (100, 200) comprising a ring gear (210) receiving torque from the input shaft (122, 322), a carrier (220) attached to and rotatable with the ring gear (210), a differential housing (230), and a bearing assembly (235) supporting the carrier (220) within the differential housing (230), the bearing assembly (235) comprises a ball bearing (250) and another bearing (240) arranged on opposite sides of the ring gear (210), wherein along a common longitudinal axis (L2) of the two output shafts (124, 126, 324, 326) an axial distance between the other bearing (240) and the ring gear (210) is smaller than an axial distance between the ball bearing (250) and the ring gear (210),
**characterised by** that the other bearing (240) is a cylindrical roller bearing.

2. The differential assembly (100, 200) according to claim 1, wherein the carrier (220) comprises a first journal portion (224) holding the first output shaft (124, 324), and a second journal portion (226) arranged on an opposite side to the first journal portion (224), the second journal portion (226) holding the second output shaft (126, 326), the ring gear (210) being asymmetrically arranged on the carrier (220) to form a relative smaller first carrier side (221) arranged between the ring gear (210) and the first journal portion (224), and a relative larger second carrier side (223) arranged between the ring gear (210) and the second journal portion (226), and wherein the cylindrical roller bearing (240) is supporting the carrier (220) to the differential housing (230) at the first carrier side (221).

3. The differential assembly (100, 200) according to claim 2, wherein the cylindrical roller bearing (240) comprises an inner race (242), an outer race (244), and a plurality of cylindrical rollers (246) being disposed between the inner and outer races (242, 244), and wherein the inner race (242) is circumferentially attached to the carrier (220) at the first carrier side (221), and the outer race (244) is non-rotatably arranged with respect to the differential housing (230).

4. The differential assembly (100, 200) according to any one of claims 2-3, wherein the ball bearing (250) comprises an inner race (252), an outer race (254), and a plurality of balls (256) being disposed between the inner and outer races (252, 254), and wherein the inner race (252) is circumferentially attached to the carrier (220) at the second carrier side (223), and the outer race (254) is non-rotatably arranged with respect to the differential housing (230).

5. The differential assembly (100, 200) according to any one of the preceding claims,
further comprising retaining rings (260) holding the ball bearing (250) in axial position relative the differential housing (230) and the carrier (220) respectively.

6. The differential assembly (100, 200) according to any one of the preceding claims,
wherein the stiffness of the cylindrical roller bearing (240) is higher compared to the stiffness of the ball bearing (250).

7. The differential assembly (100, 200) according to any one of the preceding claims,
wherein the cylindrical roller bearing (240) is arranged co-axially with the ring gear (210), and the ring gear (210) is at least partly encircling the cylindrical roller bearing (240).

8. The differential assembly (100, 200) according to any one of the preceding claims,
wherein the cylindrical roller bearing (240) is arranged co-axially with the ring gear (210), wherein at least a portion (240A) of the cylindrical roller bearing (240) is arranged in the same geometrical plane as a cross section of the ring gear (210).

9. The differential assembly (100, 200) according to any one of the preceding claims,
wherein the carrier (220) is windowless.

10. The differential assembly (100, 200) according to any one of the preceding claims,
wherein the carrier (220) comprising two separate carrier parts: a relative larger first carrier part (225), and a relative smaller second carrier part (227), and wherein the second carrier part (227) is a detachable cap in relation to the first carrier part (225).

11. The differential assembly (100, 200) according to claims 3 and 4, wherein the cylindrical roller bearing (240) is larger than the ball bearing (250) by that the inner race (242) of the cylindrical roller bearing (240) has a larger diameter compared to the inner race (252) of the ball bearing (250).

12. The differential assembly (100, 200) according to any of claims 1-11, wherein the input shaft (122, 322) has a first longitudinal axis (L1), and the common longitudinal axis (L2) of the two output shafts (124, 126, 324, 326) is a second longitudinal axis (L2), and wherein the first and second longitudinal axes (L1, L2) are parallel.

13. A vehicle (102) comprising a differential assembly (100, 200) according to any one of clams 1-12.

## Patentansprüche

1. Differentialbaugruppe (100, 200), die Drehmoment von einer Eingangswelle (122, 322) auf eine erste und eine zweite Ausgangswelle (124, 126, 324, 326) verteilt, wobei die Differentialbaugruppe (100, 200) ein Hohlrad (210), das Drehmoment von der Eingangswelle (122, 322) aufnimmt, einen Träger (220), der an dem Hohlrad (210) befestigt und mit diesem drehbar ist, ein Differentialgehäuse (230) und eine Lagerbaugruppe (235), die den Träger (220) innerhalb des Differentialgehäuses (230) stützt, umfasst, wobei die Lageranordnung (235) ein Kugellager (250) und ein anderes Lager (240) umfasst, die auf gegenüberliegenden Seiten des Hohlrads (210) angeordnet sind, wobei entlang einer gemeinsamen Längsachse (L2) der zwei Ausgangswellen (124, 126, 324, 326) ein axialer Abstand zwischen dem anderen Lager (240) und dem Hohlrad (210) kleiner ist als ein axialer Abstand zwischen dem Kugellager (250) und dem Hohlrad (210), **dadurch gekennzeichnet, dass** das andere Lager (240) ein zylindrisches Rollenlager ist.

2. Differentialbaugruppe (100, 200) nach Anspruch 1, wobei der Träger (220) einen ersten Zapfenabschnitt (224), der die erste Ausgangswelle (124, 324) hält, und einen zweiten Zapfenabschnitt (226), der auf einer dem ersten Zapfenabschnitt (224) gegenüberliegenden Seite angeordnet ist, umfasst, wobei der zweite Zapfenabschnitt (226) die zweite Ausgangswelle (126, 326) hält, wobei das Hohlrad (210) asymmetrisch auf dem Träger (220) angeordnet ist, um eine relativ kleinere erste Trägerseite (221), die zwischen dem Hohlrad (210) und dem ersten Zapfenabschnitt (224) angeordnet ist, und eine relativ größere zweite Trägerseite (223), die zwischen dem Hohlrad (210) und dem zweiten Zapfenabschnitt (226) angeordnet ist, zu bilden, und wobei das zylindrische Rollenlager (240) den Träger (220) an dem Differentialgehäuse (230) auf der ersten Trägerseite (221) stützt.

3. Differentialbaugruppe (100, 200) nach Anspruch 2, wobei das zylindrische Rollenlager (240) einen Innenring (242), einen Außenring (244) und mehrere zylindrische Rollen (246) umfasst, die zwischen dem Innen- und dem Außenring (242, 244) angeordnet sind, und wobei der Innenring (242) umlaufend an dem Träger (220) auf der ersten Trägerseite (221) befestigt ist und der Außenring (244) mit Bezug auf das Differentialgehäuse (230) drehfest angeordnet ist.

4. Differentialbaugruppe (100, 200) nach einem der Ansprüche 2-3, wobei das Kugellager (250) einen Innenring (252), einen Außenring (254) und mehrere Kugeln (256) umfasst, die zwischen dem Innen- und dem Außenring (252, 254) angeordnet sind, und wobei der Innenring (252) umlaufend an dem Träger (220) auf der zweiten Trägerseite (223) befestigt ist und der Außenring (254) in Bezug auf das Differentialgehäuse (230) drehfest angeordnet ist.

5. Differentialbaugruppe (100, 200) nach einem der vorhergehenden Ansprüche, ferner umfassend Halteringe (260), die das Kugellager (250) in axialer Position relativ zu dem Differentialgehäuse (230) bzw. dem Träger (220) halten.

6. Differentialbaugruppe (100, 200) nach einem der vorhergehenden Ansprüche, wobei die Steifigkeit des zylindrischen Rollenlagers (240) im Vergleich zu der Steifigkeit des Kugellagers (250) höher ist.

7. Differentialbaugruppe (100, 200) nach einem der vorhergehenden Ansprüche, wobei das zylindrische Rollenlager (240) koaxial mit dem Hohlrad (210) angeordnet ist und das Hohlrad (210) das zylindrische Rollenlager (240) zumindest teilweise umgibt.

8. Differentialbaugruppe (100, 200) nach einem der vorhergehenden Ansprüche, wobei das zylindrische Rollenlager (240) koaxial mit dem Hohlrad (210) angeordnet ist, wobei zumindest ein Abschnitt (240A) des zylindrischen Rollenlagers (240) in der gleichen geometrischen Ebene wie ein Querschnitt des Hohlrads (210) angeordnet ist.

9. Differentialbaugruppe (100, 200) nach einem der vorhergehenden Ansprüche, wobei der Träger (220) fensterlos ist.

10. Differentialbaugruppe (100, 200) nach einem der vorhergehenden Ansprüche, wobei der Träger (220) zwei separate Trägerteile umfasst: einen relativ größeren ersten Trägerteil (225) und einen relativ kleineren zweiten Trägerteil (227), und wobei der zweite Trägerteil (227) eine in Relation zu dem ersten Trägerteil (225) lösbare Kappe ist.

11. Differentialbaugruppe (100, 200) nach Anspruch 3 und 4, wobei das zylindrische Rollenlager (240) insofern größer als das Kugellager (250) ist, dass der Innenring (242) des zylindrischen Rollenlagers (240) im Vergleich zum Innenring (252) des Kugellagers (250) einen größeren Durchmesser aufweist.

12. Differentialbaugruppe (100, 200) nach einem der Ansprüche 1-11, wobei die Eingangswelle (122, 322) eine erste Längsachse (L1) aufweist und die gemeinsame Längsachse (L2) der zwei Ausgangswellen (124, 126, 324, 326) eine zweite Längsachse (L2) ist, und wobei die erste und die zweite Längsachse (L1, L2) parallel sind.

13. Fahrzeug (102), das eine Differentialbaugruppe (100, 200) nach einem der Ansprüche 1-12 umfasst.

## Revendications

1. Ensemble différentiel (100, 200) distribuant un couple provenant d'un arbre d'entrée (122, 322) à des premier et second arbres de sortie (124, 126, 324, 326), l'ensemble différentiel (100, 200) comprenant une couronne dentée (210) recevant un couple provenant de l'arbre d'entrée (122, 322), un porte-couronne (220) fixé à la couronne dentée (210) et rotatif avec celle-ci, un carter de différentiel (230), et un ensemble roulement (235) supportant le porte-couronne (220) à l'intérieur du carter de différentiel (230), l'ensemble roulement (235) comprend un roulement à billes (250) et un autre roulement (240) agencés sur des côtés opposés de la couronne dentée (210), dans lequel, le long d'un axe longitudinal commun (L2) des deux arbres de sortie (124, 126, 324, 326), une distance axiale entre l'autre roulement (240) et la couronne dentée (210) est plus petite qu'une distance axiale entre le roulement à billes (250) et la couronne dentée (210), **caractérisé en ce que** l'autre roulement (240) est un roulement à rouleaux cylindriques.

2. Ensemble différentiel (100, 200) selon la revendication 1, dans lequel le porte-couronne (220) comprend une première portion tourillon (224) retenant le premier arbre de sortie (124, 324), et une seconde portion tourillon (226) agencée sur un côté opposé à la première portion tourillon (224), la seconde portion tourillon (226) retenant le second arbre de sortie (126, 326), la couronne dentée (210) étant asymétriquement agencée sur le porte-couronne (220) pour former un premier côté de porte-couronne relativement plus petit (221) agencé entre la couronne dentée (210) et la première portion tourillon (224), et un second côté de porte-couronne relativement plus grand (223) agencé entre la couronne dentée (210) et la seconde portion tourillon (226), et dans lequel le roulement à rouleaux cylindriques (240) supporte le porte-couronne (220), par rapport au carter de différentiel (230), sur le premier côté de porte-couronne (221).

3. Ensemble différentiel (100, 200) selon la revendication 2, dans lequel le roulement à rouleaux cylindriques (240) comprend une cage intérieure (242), une cage extérieure (244), et une pluralité de rouleaux cylindriques (246) étant disposés entre les cages intérieure et extérieure (242, 244), et dans lequel la cage intérieure (242) est circonférentiellement fixée au porte-couronne (220) sur le premier côté de porte-couronne (221), et la cage extérieure (244) est agencée de façon non rotative par rapport au carter de différentiel (230).

4. Ensemble différentiel (100, 200) selon l'une quelconque des revendications 2 et 3, dans lequel le roulement à billes (250) comprend une cage intérieure (252), une cage extérieure (254), et une pluralité de billes (256) disposées entre les cages intérieure et extérieure (252, 254), et dans lequel la cage intérieure (252) est circonférentiellement fixée au porte-couronne (220) sur le second côté de porte-couronne (223), et la cage extérieure (254) est agencée de façon non rotative par rapport au carter de différentiel (230).

5. Ensemble différentiel (100, 200) selon l'une quelconque des revendications précédentes, en outre comprenant des bagues de retenue (260) retenant le roulement à billes (250) dans une position axiale relativement au carter de différentiel (230) et au porte-couronne (220), respectivement.

6. Ensemble différentiel (100, 200) selon l'une quelconque des revendications précédentes, dans lequel la raideur du roulement à rouleaux cylindriques (240) est plus élevée comparativement à la raideur du roulement à billes (250).

7. Ensemble différentiel (100, 200) selon l'une quelconque des revendications précédentes, dans lequel le roulement à rouleaux cylindriques (240) est agencé coaxialement avec la couronne dentée (210), et la couronne dentée (210) encercle au moins partiellement le roulement à rouleaux cylindriques (240).

8. Ensemble différentiel (100, 200) selon l'une quelconque des revendications précédentes, dans lequel le roulement à rouleaux cylindriques (240) est agencé coaxialement avec la couronne dentée (210), dans lequel au moins une portion (240A) du roulement à rouleaux cylindriques (240) est agencée dans le même plan géométrique qu'une section transversale de la couronne dentée (210).

9. Ensemble différentiel (100, 200) selon l'une quelconque des revendications précédentes, dans lequel le porte-couronne (220) est sans fenêtre.

10. Ensemble différentiel (100, 200) selon l'une quelconque des revendications précédentes, dans lequel le porte-couronne (220) comprenant deux parties distinctes de porte-couronne : une première partie de porte-couronne relativement plus grande (225), et une seconde partie de porte-couronne relativement plus petite (227), et dans lequel la seconde partie de porte-couronne (227) est une chape séparable relativement à la première partie de porte-couronne (225).

11. Ensemble différentiel (100, 200) selon les revendications 3 et 4, dans lequel le roulement à rouleaux cylindriques (240) est plus grand que le roulement à billes (250) en ce que la cage intérieure (242) du roulement à rouleaux cylindriques (240) a un diamètre plus grand comparativement à la cage intérieure (252) du roulement à billes (250).

12. Ensemble différentiel (100, 200) selon de quelconques des revendications 1 à 11, dans lequel l'arbre d'entrée (122, 322) a un premier axe longitudinal (L1), et l'axe longitudinal commun (L2) des deux arbres de sortie (124, 126, 324, 326) est un second axe longitudinal (L2), et dans lequel les premier et second axes longitudinaux (L1, L2) sont parallèles.

13. Véhicule (102), comprenant un ensemble différentiel (100, 200) selon l'une quelconque des revendications 1 à 12.
